# FASCICULE DE BREVET EUROPEEN

(11) **EP 0 861 041 B1**
(45) Date de publication et mention de la délivrance du brevet: **22.09.1999**
(21) Numéro de dépôt: 96934949.7
(22) Date de dépôt: 21.10.1996
(51) Int. Cl.: A47J 37/08

(54) **GRILLE-PAIN ELECTRIQUE ET PROCEDE DE MONTAGE D'UN DISPOSITIF ACTIONNEUR ELECTROMAGNETIQUE DANS LE BOITIER DU GRILLE-PAIN**
ELEKTRISCHER TOASTER UND VERFAHREN ZUM MONTIEREN EINER ELEKTOMAGNETSCHEN BETÄTIGUNGSVORRICHUNG IN EINEM TOASTERGEHÄUSE
ELECTRIC TOASTER AND METHOD FOR MOUNTING AN ELECTROMAGNETIC ACTUATOR DEVICE IN THE TOASTER HOUSING

(30) Priorité: 26.10.1995 FR 9512666
(43) Date de publication de la demande: 02.09.1998
(73) Titulaire: MOULINEX S.A., 75008 Paris (FR)
(72) Inventeur: BASORA, Sanjuan Antonio, E-08028 Barcelone (ES); ARNEDO, Julian, E-08031 Barcelone (ES)
(74) Mandataire: Busquets, Jean-Pierre
(86) Numéro de dépôt international: FR9601646
(87) Numéro de publication internationale: WO9715220

(56) Documents cités:
- DE-A- 3 020 778
- DE-C- 3 731 959
- DE-C- 4 439 776
- FR-A- 2 235 566
- GB-A- 2 264 824

## Description

L'invention se rapporte aux grille-pain comportant un boîtier renfermant une enceinte de grillage équipée d'au moins une résistance chauffante et dans laquelle est monté mobile un chariot porte-pain entre au moins une position d'éjection et une position de grillage en laquelle il est retenu par un dispositif actionneur électromagnétique comportant une bobine de commande à support creux qui est solidaire d'une platine montée fixe dans le boîtier et portant au moins des organes de connexion électrique et qui embrasse un noyau magnétique, ainsi qu'une armature mobile adaptée à retenir le chariot porte-pain en sa position de grillage lorsque la bobine est alimentée. Un tel grille-pain est notamment décrit dans FR-A-2235566.

Dans les grille-pain de ce type, le dispositif actionneur électromagnétique est monté sur une platine comportant des organes de connexion électrique tels que des pistes imprimées ainsi que des composants électriques et électroniques de commande de l'alimentation de la résistance chauffante et de la bobine de l'actionneur. Ces pistes ou circuits imprimés sont généralement obtenus par la technique de la photogravure sur une platine isolante relativement mince, et sont donc très sensibles à toutes contraintes mécaniques exercées sur elles notamment lors de l'implantation de l'ensemble bobine/noyau de l'actionneur et de la connexion directe des fils de la bobine sur lesdites pistes. En outre, il s'avère que lors du fonctionnement du chariot porte-pain, les chocs répétés de l'armature mobile sur le noyau magnétique et l'effort de traction de cette armature mobile exercé sur le noyau à l'encontre de la force magnétique, exercent sur la bobine et les connexions et partant les pistes imprimées des contraintes supplémentaires.

Ces différentes contraintes provoquent notamment des microfissures dans les pistes qui conduisent à la longue à une rupture des circuits électriques.

L'invention a pour but d'éliminer les inconvénients ci-dessus et de réaliser ainsi un grille-pain dont le dispositif actionneur n'occasionne aucune détérioration de la platine quelles que soient les contraintes de réalisation, de montage et de fonctionnement.

Selon l'invention, le noyau magnétique est monté mécaniquement indépendant du support de la bobine et de la platine, et est solidaire d'une pièce du boîtier.

Ainsi, on comprend que la désolidarisation mécanique du noyau magnétique du support de la bobine isole cette platine notamment des pièces en mouvement et élimine donc la transmission des contraintes, exercées par le chariot porte-pain sur le noyau, à la platine évitant ainsi sa détérioration.

L'invention vise également un procédé de montage d'un tel dispositif actionneur électromagnétique dans le boîtier des grille-pain qui est parfaitement adapté à une fabrication en grande série.

Les caractéristiques et avantages de l'invention ressortiront de la description qui va suivre, prise à titre d'exemple non limitatif, en référence aux dessins annexés dans lesquels :
- la figure 1 est une représentation partielle en coupe verticale d'un grille-pain selon l'invention et illustrant un dispositif actionneur électromagnétique ;
- la figure 2 est une coupe verticale partielle à plus grande échelle selon la ligne II-II de la figure 1 du dispositif actionneur;
- la figure 3 est une vue agrandie d'un détail du dispositif actionneur de la figure 1 illustrant l'armature mobile.

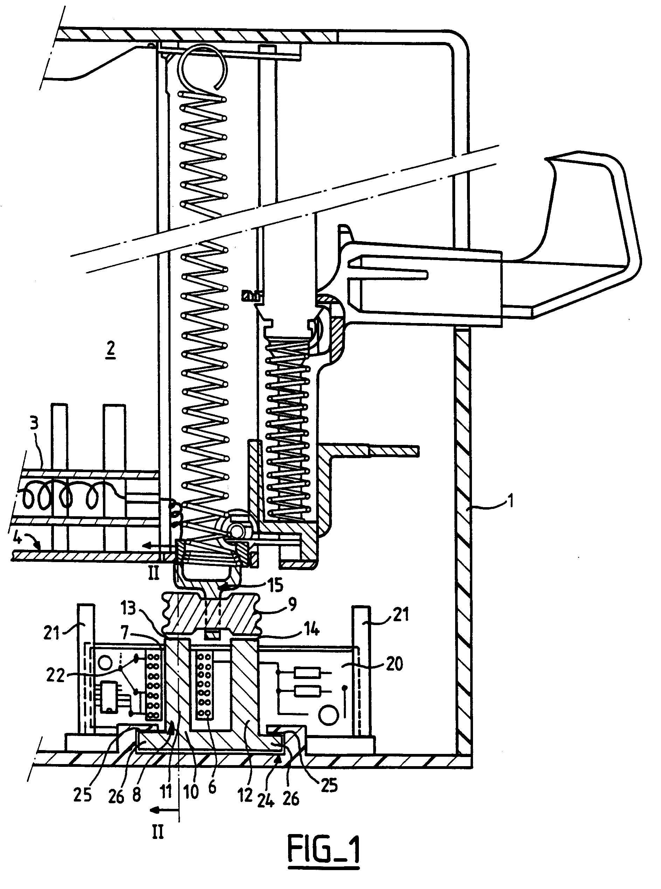

La figure 1 représente en vue partielle un grille-pain comportant un boîtier 1 renfermant une enceinte de grillage 2 équipée d'au moins une résistance chauffante 3 et dans laquelle est monté mobile verticalement un chariot porte-pain 4 entre au moins une position d'éjection (non représentée) et une position de grillage, illustrée à la figure 1, en laquelle il est retenu par un dispositif actionneur électromagnétique 5. Ce dispositif actionneur comporte de façon connue en soi une bobine de commande 6 à support creux 7 qui embrasse un noyau magnétique 8, et une armature mobile 9 adaptée à retenir le chariot porte-pain 4 en sa position de grillage lorsque la bobine 6 est alimentée et donc à venir se plaquer sur le noyau magnétisé. Comme illustré, le noyau magnétique présente la forme générale d'un U et comprend à cet effet une embase 10 portant de deux branches 11 et 12 dont les extrémités libres 13 et 14 sont situées dans un même plan ; l'une 11 desdites branches portant la bobine de commande 6 et faisant saillie de la bobine par son extrémité libre 13. Quant à l'armature mobile 9, elle est constituée par une pièce magnétique de forme générale parallélépipédique et suspendue à un anneau 15 solidaire du chariot porte-pain 4.

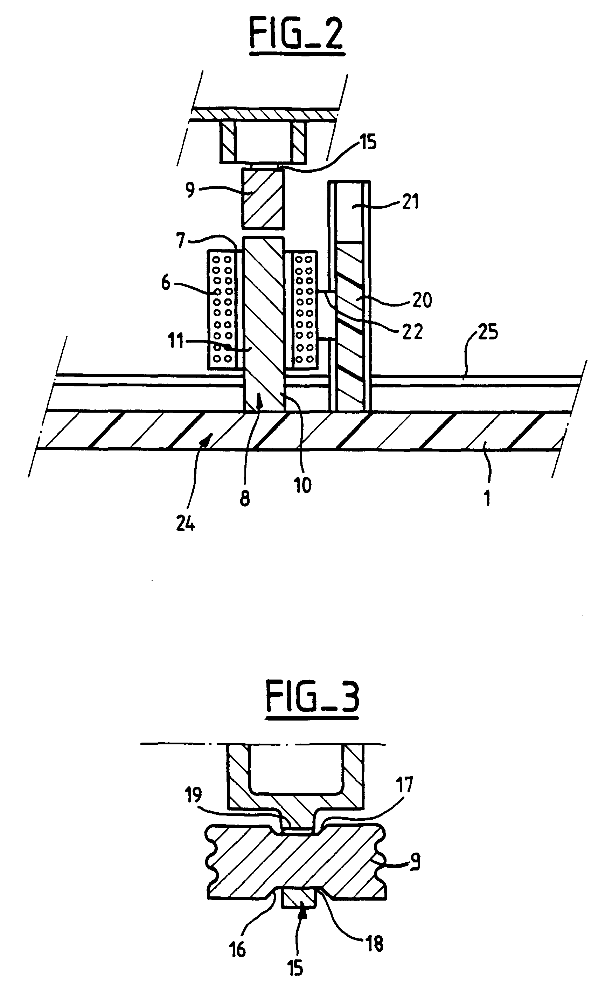

Selon une réalisation préférée mieux représentée à la figure 3, la pièce magnétique de l'armature mobile 9 présente dans sa région centrale deux dépression 16-17 opposées pratiquées respectivement dans les deux grandes faces latérales et l'anneau 15 comporte sur sa surface interne deux régions opposées 18-19 dont l'une 18 vient au contact de la dépression 16 et sert de pivot pour l'armature mobile, tandis que l'autre 19 vient en regard de la dépression 17 et sert de centrage pour cette armature. Ainsi, la face latérale inférieure est adaptée à venir en contact plan avec les extrémités 13 et 14 du noyau.

Comme il est connu en soi, le boîtier 1 renferme toutes les commandes électriques et électroniques d'alimentation de la résistance chauffante 3 et de la bobine 6 du dispositif actionneur électromagnétique 5. A cet effet, il comprend une platine 20 du type circuit imprimé montée fixe dans des guides 21 du boîtier 1 et portant les composants électroniques, les organes de connexion 22 ainsi que la bobine 6 de commande de l'actionneur 5.

Selon l'invention, le noyau magnétique 8 est monté mécaniquement indépendant du support creux 7 de la bobine 6 et de la platine 20, et est solidaire d'une pièce 24 du boîtier 1. Comme on peut mieux le voir sur la figure 2, le support 7 entoure la branche 11 du noyau avec un léger jeu α ne perturbant pratiquement pas la magnétisation du noyau 8.

Ainsi grâce à cette réalisation particulière de la construction du dispositif actionneur, on reporte toutes les contraintes mécaniques imposées au noyau 8 par l'armature mobile 9 directement sur la pièce 24 du boitier 1 et non plus sur la bobine 6. Par conséquent, la bobine 6 étant isolée des chocs ne transmet aucune réaction mécanique ou contrainte à la platine 20 et donc n'entraîne aucune détérioration des pistes ou connexions électriques ou des composants y attachés.

Selon une autre caractéristique importante de l'invention, le noyau magnétique 8 comporte une embase 10 présentant des moyens d'assemblage avec la pièce 24 du boîtier 1. Comme illustré à la figure 1, les moyens d'assemblage comportent, d'une part, sur la pièce 24 deux glissières 25 situées en regard l'une de l'autre, et d'autre part, sur l'embase 10 deux patins 26 opposés ayant respectivement une forme complémentaire à celle des glissières et engagés dans lesdites glissières. Un tel assemblage de forme générale en T assure à la fois un bon positionnement et une bonne fixation du noyau, empêchant ainsi le désalignement de la branche 11 de l'axe de la bobine 6 et donc garantissant le jeu α entre le support 7 et cette branche 11. Dans un mode de réalisation préféré, le boîtier 1 étant réalisé en un matériau plastique, la pièce 24 et les glissières 25 sont venues de moulage directement avec le boîtier et plus exactement avec la partie du fond du boîtier. L'assemblage ainsi réalisé entre l'embase métallique 10 du noyau 8 et les glissières 25 en plastique assure par lui-même un bon coefficient de frottement entre les pièces assurant la fixation correcte du noyau par rapport à la bobine 6.

Dans la réalisation illustrée aux figures 1 et 2, la bobine 6 est montée sur la platine 20 de telle sorte que son axe soit parallèle au plan de ladite platine, et la platine est elle-même montée selon un plan parallèle au moins au noyau 8 traversant le support creux 7 de la bobine, à savoir la branche 11. De préférence, la platine 20 s'étend parallèlement aux deux branches 11 et 12 du noyau 8 permettant ainsi un montage aisé de la bobine 6 sur le noyau 8 comme il sera expliqué plus loin.

Grâce à cet assemblage direct de l'embase 10 du noyau 8 dans les glissières 25, l'armature mobile 9 vient correctement au contact des extrémités 13 et 14 du noyau lorsque le chariot 4 est en sa position de grillage, et la force magnétique d'attraction exercée par le noyau sur cette armature 9, à l'encontre des ressorts d'éjection tirant le chariot vers le haut, ne transmet aucune contrainte mécanique à la bobine 6 et partant à la platine 20.

On va maintenant expliciter le procédé de montage du dispositif actionneur 5 dans le boîtier 1 du grille-pain.

Selon un mode général, on assemble l'embase 10 du noyau 8 avec la pièce du boitier 1, puis l'on amène la platine 20 portant la bobine 6, connectée aux pistes conductrices, à proximité du noyau 8 de manière à permettre l'enfilement du support creux 7 sur ledit noyau, puis l'on fixe ladite platine dans le boîtier.

Dans l'exemple illustré aux figures 1 et 2 dans lequel le boîtier 1 est en matériau plastique et l'enceinte de grillage disposée verticalement, on procède dans une première opération à l'assemblage de l'embase 10 dans les glissières 25 par un mouvement de coulissement jusqu'à une position dite de blocage située à proximité des guides 21 de fixation de la platine 20, puis dans une seconde opération on glisse par un mouvement vertical de haut en bas la platine 20 dans les guides verticaux 21 jusqu'à enfilement correct de la bobine 6 sur la branche 11 du noyau 8, correspondant à la mise en butée de la plaquette sur la partie du boîtier portant les guides 21.

Ainsi, non seulement on a réalisé un dispositif actionneur 5 n'occasionnant aucune détérioration de la platine 20, mais aussi on permet une mise en fabrication extrêmement simplifiée, fiable, autorisant même une fabrication automatisée à faible coût de revient.

## Revendications

1. Grille-pain électrique comportant un boîtier (1) renfermant une enceinte de grillage (2) équipée d'au moins une résistance chauffante (3) et dans laquelle est monté mobile un chariot porte-pain (4) entre au moins une position d'éjection et une position de grillage en laquelle il est retenu par un dispositif actionneur électromagnétique (5) comportant une bobine de commande (6) à support creux (7) qui est solidaire d'une platine (20) montée fixe dans le boîtier et portant au moins des organes de connexion électrique (22), et qui embrasse un noyau magnétique (8), ainsi qu'une armature mobile (9) adaptée à retenir le chariot porte-pain (4) en sa position de grillage lorsque la bobine (6) est alimentée, **caractérisé en ce que** le noyau magnétique (8) est monté mécaniquement indépendant du support (7) de la bobine (6) et de la platine (20), et est solidaire d'une pièce (24) du boîtier (1).

2. Grille-pain électrique selon la revendication 1, **caractérisé en ce que** le support creux (7) de la bobine (6) entoure le noyau (8) avec un léger jeu (α).

3. Grille-pain électrique selon la revendication 1 ou 2,
**caractérisé en ce que** le noyau (8) comporte une embase (10) présentant des moyens d'assemblage avec la pièce (24) du boîtier (1).

4. Grille-pain électrique selon la revendication 3, **caractérisé en ce que** la platine (20) est montée fixe dans des guides (21) solidaires du boitier (1).

5. Grille-pain électrique selon la revendication 3 ou 4,
**caractérisé en ce que** le noyau (8) présente la forme générale d'un U dont l'embase (10) porte deux branches (11 et 12) dont les extrémités libres (13 et 14) sont situées dans un même plan ; l'une (11) desdites branches portant la bobine (6) et faisant saillie de la bobine par son extrémité (13).

6. Grille-pain électrique selon l'une quelconque des revendications 3 à 5,
**caractérisé en ce que** la pièce magnetique de l'armature mobile (9) présente dans sa région centrale deux dépression (16-17) opposées pratiquées respectivement dans les deux grandes faces latérales et est suspendue à un anneau (15) comporte sur sa surface interne deux régions opposées (18-19) dont l'une (18) vient au contact de la dépression (16) et sert de pivot pour l'armature mobile, tandis que l'autre (19) vient en regard de la dépression (17) et sert de centrage pour cette armature, ainsi, la face latérale inférieure est adaptée à venir en contact plan avec les extrémités (13 et 14) du noyau.

7. Grille-pain électrique selon l'une quelconque des revendications 3 à 6,
**caractérisé en-ce que** les moyens d'assemblage comportent, d'une part, sur la pièce (24) deux glissières (25) en regard l'une de l'autre, et d'autre part, sur l'embase (10) deux patins (26) opposés ayant respectivement une forme complémentaire à celle des glissières et engagés dans lesdites glissières.

8. Grille-pain électrique selon la revendication 7, **caractérisé en ce que** le boîtier (1) étant réalisé en un matériau plastique, la pièce (24) et les glissières (25) sont venues d'une pièce avec ledit boîtier.

9. Grille-pain électrique selon l'une quelconque des revendications précédentes,
**caractérisé en ce que** la bobine (6) ayant son axe parallèle au plan de la platine (20), ladite platine est montée selon un plan parallèle au moins au noyau traversant le support creux (7) de la bobine (6).

10. Procédé de montage du dispositif actionneur électromagnétique dans le boitier du grille-pain selon l'une quelconque des revendications précédentes,
**caractérisé en ce que** l'on assemble l'embase (10) du noyau (8) avec la pièce (24) du boîtier (1), puis l'on amène la platine (20) portant la bobine (6) à proximité du noyau (8) de manière à permettre l'enfilement du support creux (7) sur ledit noyau, puis l'on fixe ladite platine (20) dans le boîtier (1).

11. Procédé de montage selon les revendications 7 et 10,
**caractérisé en ce que** l'embase (10) est assemblée dans les glissières (25) par un mouvement de coulissement jusqu'à une position dite de blocage située à proximité des guides (21) de fixation de la platine (20), puis l'on glisse la platine dans les guides (21) jusqu'à enfilement correct de la bobine (6) sur le noyau (8).

## Claims

1. Electric toaster comprising a casing (1) enclosing a toasting chamber (2) equipped with at least one heating element (3) and in which a bread-holder carriage (4) is mounted so as to be able to move between at least one ejection position and a toasting position in which it is held by an electromagnetic actuator device (5) having a control coil (6) with a hollow support (7) which is fixed to a platen (20) mounted fixedly in the casing and carrying at least electrical connection members (22), and which embraces a magnetic core (8), and a movable armature (9) adapted to hold the bread-holder carriage (4) in its toasting position when the coil (6) is powered,
**characterised in that** the magnetic core (8) is mounted mechanically independent of the support (7) for the coil (6) and the platen (20), and is secured to a piece (24) of the casing (1).

2. Electric toaster according to claim 1,
**characterised in that** the hollow support (7) of the coil (6) surrounds the core (8) with a slight clearance (α).

3. Electric toaster according to claim 1 or 2,
**characterised in that** the core (8) comprises a base (10) having means of connection with the piece (24) of the casing (1).

4. Electric toaster according to claim 3,
**characterised in that** the platen (20) is mounted fixedly in guides (21) secured to the casing (1).

5. Electric toaster according to claim 3 or 4,
**characterised in that** the core (8) has the general shape of a U whose base (10) carries two legs (11 and 12) whose free ends (13 and 14) are situated in a same plane ; one (11) of the said legs carrying the coil (6) and projecting from the coil by its end (13).

6. Electric toaster according to any one of claims 3 to 5, **characterised in that** the magnetic piece of the movable armature (9) has, in its central region, two opposing hollows (16-17) formed respectively in the two large side faces, and the annulus (15) has, on its internal surface, two opposing regions (18-19), one of which (18) comes into contact with the hollow (16) and serves as a pivot for the movable armature, whilst the other region (19) comes opposite the hollow (17) and serves as centring for this armature, thus the lower side face is adapted to come into plane contact with the ends (13 and 14) of the core.

7. Electric toaster according to any one of claims 3 to 6, **characterised in that** the connecting means include, on the one hand, on the piece (24), two runners (25) opposite each other, and on the other hand, on the base (10), two opposing shoes (26) having respectively a shape complementary to that of the runners and engaged in said runners.

8. Electric toaster according to claim 7,
**characterised in that**, the casing (1) being produced from a plastic material, the piece (24) and the runners (25) are made in one piece with said casing.

9. Electric toaster according to any one of the preceding claims,
**characterised in that**, the coil (6) having its axis parallel to the plane of the platen (20), said platen is mounted in a plane parallel at least to the core passing through the hollow support (7) of the coil (6).

10. Method for mounting the electromagnetic actuator device in the toaster casing according to any one of the preceding claims,
**characterised in that** the base (10) of the core (8) is connected with the piece (24) of the casing (1), then the platen (20) carrying the coil (6) is brought close to the core (8) so as to enable the hollow support (7) to be slipped on the core, and then the platen (20) is fixed in the casing (1).

11. Method according to claims 7 and 10,
**characterised in that** the base (10) is assembled in the runners (25) by a sliding movement as far as a so-called locking position situated close to the guides (21) for fixing the platen (20), and then the platen is slid in the guides (21) until the coil (6) is correctly slipped on the core (8).

## Patentansprüche

1. Elektrischer Brotröster mit einem Gehäuse (1), das einen mit mindestens einem Heizwiderstand (3) ausgestatteten Heizraum (2) umschließt, in welchem ein Brot-Trägerschliten (4) beweglich gehalten ist zwischen mindestens einer Ausstoß-Stellung und einer Röststellung, in welcher er von einer elektromagnetischen Betätigungsvorrichtung (5) gehalten ist, welche eine Steuerspule (6) mit hohlem Halter (7) aufweist, der fest mit einer im Gehäuse befestigten und mindestens elektrische Verbindungselemente (22) aufweisenden Platine (20) verbunden ist und einen magnetischen Kern (8) umgibt, sowie einen beweglichen Magnetanker (9), der den Brot-Trägerschlitten (4) in seiner Röststellung hält, wenn die Spule (6) mit Strom versorgt ist,
**dadurch gekennzeichnet, daß** der magnetische Kern (8) mechanisch unabhängig vom Halter (7) der Spule (6) und der Platine (20) montiert, und mit einem Teil (24) des Gehäuses (1) fest verbunden ist.

2. Elektrischer Brotröster nach Anspruch 1,
**dadurch gekennzeichnet, daß** der hohle Halter (7) der Spule (6) den Kern (8) mit einem geringen Spiel (α) umgibt.

3. Elektrischer Brotröster nach einem der Ansprüche 1 oder 2,
**dadurch gekennzeichnet, daß** der Kern (8) eine Basis (10) mit Elementen zum Zusammenbau mit dem Teil (24) des Gehäuses (1) aufweist.

4. Elektrischer Brotröster nach Anspruch 3,
**dadurch gekennzeichnet, daß** die Platine (20) in mit dem Gehäuse (1) fest verbundenen Führungsschienen (21) befestigt ist.

5. Elektrischer Brotröster nach einem der Ansprüche 3 oder 4,
**dadurch gekennzeichnet, daß**, der Kern (8) die allgemeine Form eines U aufweist, dessen Basis (10) zwei Schenkel (11 und 12) trägt, deren freie Enden (13 und 14) in einer Ebene angeordnet sind, wobei der eine (11) dieser Schenkel die Spule (6) trägt und mit seinem Ende (13) aus der Spule herausragt.

6. Elektrischer Brotröster nach einem der Ansprüche 3 bis 5,
**dadurch gekennzeichnet, daß** das magnetische Teil des beweglichen Magnetankers (9) in seinem Mittelbereich zwei gegenüberliegende Vertiefungen (16, 17) aufweist, die jeweils in den beiden großen Seitenflächen ausgebildet sind, und an einem Ring (15) aufgehängt ist, der auf seiner inneren Oberfläche zwei gegenüberliegende Bereiche (18, 19) aufweist, von denen der eine (18) mit der Vertiefung (16) in Kontakt kommt und als Drehzapfen für den beweglichen Magnetanker dient, während der andere (19) gegenüber der Vertiefung (17) zu liegen kommt und zum Zentrieren dieses Magnetankers dient, wodurch die untere Seitenfläche desselben in ebenen Kontakt mit den Enden (13 und 14) des Kerns kommen kann.

7. Elektrischer Brotröster nach einem der Ansprüche 3 bis 6,
**dadurch gekennzeichnet, daß** die Elemente zum Zusammenbau einerseits auf dem Teil (24) zwei gegenüberliegende Gleitschienen (25) und andererseits an der Basis (10) zwei gegenüberliegende Gleitschuhe (26) aufweisen, die jeweils eine zu den Gleitschienen komplementäre Form aufweisen und in die Gleitschienen eingeführt sind.

8. Elektrischer Brotröster nach Anspruch 7,
**dadurch gekennzeichnet, daß** das Gehäuse (1) aus einem Kunststoffmaterial ausgebildet sind und das Teil (24) und die Gleitschienen (25) einstückig mit dem Gehäuse geformt sind.

9. Elektrischer Brotröster nach einem der vorhergehenden Ansprüche,
**dadurch gekennzeichnet, daß** die Spule (6) mit ihrer Achse parallel zur Ebene der Platine (20) liegt, wobei die Platine in einer parallelen Ebene zumindest zum Kern montiert ist, der den hohlen Halter (7) der Spule (6) durchsetzt.

10. Montage-Verfahren der elektromagnetischen Bestätigungsvorrichtung im Gehäuse des Brotrösters nach einem der vorangehenden Ansprüche,
**dadurch gekennzeichnet, daß** die Basis (10) des Kerns (8) mit dem Teil (24) des Gehäuses (1) verbunden wird, woraufhin die die Spule (6) tragende Platine (20) in die Nähe des Kerns (8) gebracht wird, damit der hohle Halter (7) über den Kern geschoben werden kann, woraufhin die Platine (20) im Gehäuse (1) befestigt wird.

11. Montageverfahren nach Anspruch 7 oder 10,
**dadurch gekennzeichnet, daß** die Basis (10) in die Gleitschienen (25) durch eine Gleitbewegung bis zu einer sogenannten Blockierstellung eingeführt wird, die sich in der Nähe der Führungsschienen (21) zur Befestigung der Platine (20) befindet, woraufhin die Platine in die Führungsschienen (21) bis zum korrekten Aufschieben der Spule (6) auf den Kern (8) eingeschoben wird.
